# FASCICULE DE BREVET EUROPEEN

(11) **EP 3 627 662 B1**
(45) Date de publication et mention de la délivrance du brevet: **17.11.2021**
(21) Numéro de dépôt: 19197953.3
(22) Date de dépôt: 18.09.2019
(51) Int. Cl.: H02K 1/28, H02K 3/44, H02K 17/16, H02K 15/00, H02K 5/12

(54) **ROTOR POUR MACHINE ÉLECTRIQUE ASYNCHRONE À ARBRE NON TRAVERSANT**
ROTOR FÜR ASYNCHRONE ELEKTRISCHE MASCHINE MIT NICHT DURCHGEHENDER WELLE
ROTOR FOR ASYNCHRONOUS ELECTRIC MACHINE WITH NON-THROUGH SHAFT

(30) Priorité: 19.09.2018 FR 1858470
(43) Date de publication de la demande: 25.03.2020
(73) Titulaire: GE Energy Power Conversion Technology Limited, Rugby Warwickshire CV21 1BU (GB)
(72) Inventeur: GALMICHE, Christophe, 54200 TOUL (FR); MULLER, Remy, 90000 BELFORT (FR)
(74) Mandataire: Casalonga

(56) Documents cités:
- EP-A1- 3 051 675
- EP-A2- 1 102 384
- DE-A1-102009 040 123
- DE-C- 920 139
- DE-U1-202009 013 649
- JP-A- 2013 070 521
- US-B1- 6 177 750

## Description

La présente invention concerne les machines électriques tournantes asynchrones à cage d'écureuil et se rapporte plus particulièrement à un rotor comprenant un arbre non traversant utilisé dans un environnement sévère, notamment en présence de gaz corrosifs comprimés.

La présente invention concerne également une machine électrique tournante comprenant un tel rotor.

Une machine électrique tournante asynchrone peut être utilisée dans un environnement sévère tel qu'un environnement comprenant des agents chimiquement agressifs susceptibles de détériorer des éléments de la machine, tel qu'un environnement pressurisé soumis à des variations importantes de pression, par exemple lorsque la machine électrique est utilisée et incorporée dans un motocompresseur.

Dans cette application, le rotor est refroidi par du gaz comprimé contenant des impuretés et/ou des composants chimiques agressifs détériorant le vernis d'isolation entre les tôles magnétiques ou les tôles magnétiques elles-mêmes.

Le document EP0609645 décrit un rotor feuilleté comprenant un arbre non traversant pour un moteur électrique asynchrone à cage d'écureuil.

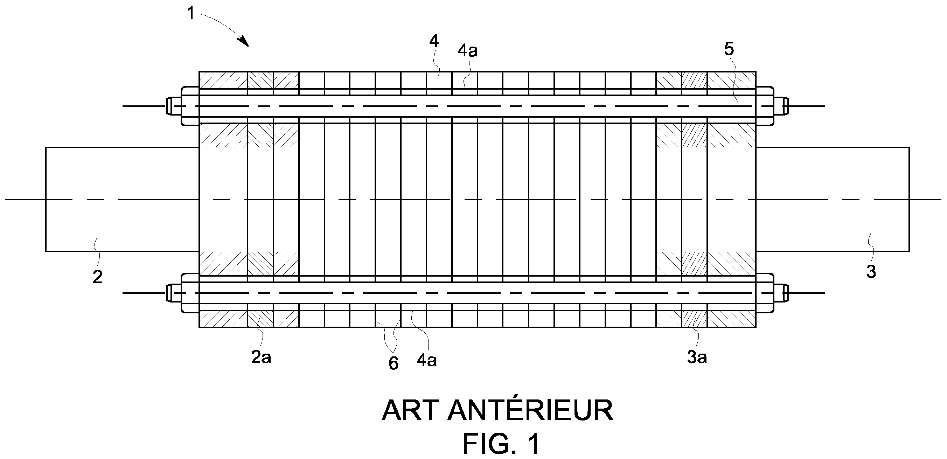

On se réfère à la figure 1 qui représente une coupe d'un tel rotor 1 selon une direction axiale.

Le rotor comprend deux demi-arbres 2 et 3 entre lesquels sont insérées des tôles magnétiques 4 maintenues compactées par des tirants 5 reliant les deux demi-arbres 2 et 3.

Les tôles magnétiques 4 forment la masse magnétique du rotor.

Le rotor 1 comprend des couronnes ou disques de court-circuit 2a et 3a reliant des barres conductrices (non représentées), par exemple en cuivre, formant une cage d'écureuil.

Chaque tôle magnétique 4 comprend des trous 4a dans lesquels sont insérés les tirants 5 et a une épaisseur généralement comprise entre un dixième de millimètre et un millimètre.

Chaque tôle 4 est enduite d'une couche de vernis d'isolation 6 empêchant un contact électrique entre des tôles adjacentes de manière à minimiser les pertes par courant de Foucault et augmenter le rendement du moteur.

Cependant, dans un motocompresseur, la machine électrique est noyée dans le gaz manipulé par le motocompresseur. Ce gaz contient des agents agressifs, tels que des particules acides, susceptibles de détériorer la couche de vernis et de corroder ou détruire les tirants, les disques de court-circuit et les barres en cuivres, ainsi que les tôles magnétiques fer-silicium.

De plus, lors du fonctionnement du motocompresseur à des pressions élevées, par exemple 100 bars, du gaz pénètre à l'intérieur du rotor entre les tôles 4 et dans les trous 4a.

Lorsque le motocompresseur s'arrête, un différentiel de pression se crée entre l'intérieur du rotor à la pression de 100 bars et l'intérieur du motocompresseur à la pression atmosphérique créant des contraintes supplémentaires sur les tirants susceptible de les détériorer, et susceptible de décoller les tôles les unes des autres sous l'effet de la pression résiduelle.

Le document DE 19956042 divulgue un rotor avec un arbre non traversant pour une machine électrique tournante asynchrone comprenant une masse magnétique formée par un empilement de tôles compactées entre deux demi-arbres.

Cependant, les tôles sont partiellement évidées en leur centre et sont assemblées entre elles sans étanchéité.

Les parties évidées des tôles du rotor stockent du gaz à haute pression lors du fonctionnement de la machine électrique tournante.

Lors de l'arrêt de la machine électrique, un différentiel de pression crée entre l'intérieur et l'extérieur du rotor est susceptible de détériorer ce type de rotor. D'autres rotors avec un arbre non traversant sont divulgués dans les documents DE102009040123 et EP1102384.

Il est donc proposé de pallier les inconvénients des rotors pour une machine électrique tournante asynchrone à cage d'écureuil selon l'état de la technique.

Au vu de ce qui précède, selon l'invention il est proposé un rotor pour machine électrique tournante asynchrone selon la revendication indépendante 1. On empêche ainsi qu'un gaz entre en contact avec les barres conductrices.

On empêche ainsi, ou on limite, la détérioration du rotor utilisé dans un environnement chimiquement agressif et soumis à des variations importantes de pression.

Selon une caractéristique, chaque extrémité des barres conductrices est logée avec jeu dans un trou borgne d'un disque de court-circuit.

Selon une autre caractéristique, chaque extrémité des barres conductrices est logée avec jeu dans un trou débouchant d'un disque de court-circuit.

Selon un premier mode de réalisation, la masse magnétique comprend un corps métallique monobloc comportant des logements accueillant les barres conductrices.

De préférence, le rotor comporte en outre des vis réparties uniformément sur au moins un diamètre du demi-arbre, chaque vis étant en prise dans un taraudage du corps métallique monobloc de manière à maintenir compactés les disques de court-circuit et le corps métallique monobloc entre les demi-arbres, chaque tête de vis étant logée dans un lamage du demi-arbre comprenant au fond du lamage une gorge circulaire, un joint étant disposé dans la gorge circulaire de sorte que le gaz ne puisse pas entrer en contact avec le taraudage.

Avantageusement, au moins une extrémité du corps métallique comprend une gorge circulaire comprenant un joint de manière à former un contact étanche entre le corps métallique et le disque de court-circuit.

Selon l'invention la surface du demi-arbre en contact avec le disque de court-circuit comprend une gorge circulaire comprenant un joint de manière à former un contact étanche entre le demi-arbre et disque de court-circuit.

Selon un mode de réalisation, la masse magnétique comprend un empilement de plaques métalliques comportant des logements accueillant les barres conductrices, au moins une face de chaque plaque métallique comportant une gorge circulaire comprenant un joint de manière à former un contact étanche entre les surfaces des plaques métalliques en contact.

Avantageusement, le rotor comporte en outre des tirants répartis uniformément sur au moins un diamètre du rotor, les tirants étant insérés dans des deuxièmes logements des plaques métalliques, une première extrémité des tirants étant en prise dans un trou borgne taraudé du premier demi-arbre et la deuxième extrémité des tirants étant en prise avec un écrou borgne disposé dans un lamage du deuxième demi-arbre, le deuxième demi-arbre comportant au fond du lamage une gorge circulaire comprenant un joint de manière à maintenir compactées les plaques métalliques et les disques de court-circuit entre les demi-arbres et de sorte que le gaz ne rentre pas en contact avec le tirant.

Selon l'invention, la surface du demi-arbre en contact avec le disque de court-circuit comprend une gorge circulaire comprenant un joint de manière à former un contact étanche entre le demi-arbre et le disque de court-circuit.

Selon un mode de réalisation, au moins un demi-arbre comporte un lamage circulaire, le diamètre extérieur du disque de court-circuit, le diamètre du lamage et les diamètres intérieur et extérieur de l'extrémité du demi-arbre dirigée vers la plaque métallique étant dimensionnés de sorte que le disque de court circuit s'insère dans le lamage circulaire et l'extrémité du demi-arbre s'insère dans la gorge circulaire de la plaque métallique de sorte que le joint soit comprimé et le gaz ne rentre pas en contact avec le disque de court-circuit.

Selon un mode de réalisation, le rotor comprend en outre une couronne, au moins un demi-arbre comportant sur sa face en contact avec le disque de court-circuit une gorge circulaire comprenant un joint, la couronne, la gorge circulaire du demi-arbre, et le diamètre extérieur du disque de court-circuit étant dimensionnés de sorte que le disque de court-circuit s'insère dans le diamètre intérieur de la couronne et que la couronne s'insère dans la gorge circulaire du demi-arbre et dans la gorge circulaire de la plaque métallique comprenant un joint de sorte que les joints soient comprimés et que le gaz ne rentre pas en contact avec le disque de court-circuit.

Selon un mode de réalisation, au moins un demi-arbre comporte sur la face en contact avec le disque de court-circuit une gorge circulaire comprenant un joint, la plaque métallique comportant un lamage circulaire sur la face en contact avec le disque de court-circuit, le diamètre extérieur du disque de court-circuit, le diamètre du lamage et le diamètre intérieur et extérieur de l'extrémité de la plaque métallique dirigée vers le demi-arbre étant dimensionnés de sorte que le disque de court circuit s'insère dans le lamage circulaire et l'extrémité de la plaque métallique s'insère dans la gorge circulaire du demi-arbre de sorte que le joint soit comprimé et que le gaz ne rentre pas en contact avec le disque de court-circuit.

De préférence, le joint comprend un joint de préférence torique en inox, en polymère ou métallique, de préférence d'une seule pièce sans coupure ni raboutage.

Avantageusement, la surface extérieure du rotor comprend un revêtement comprenant du nickel ou comprenant un alliage de type NiCrAlY ou un alliage du type MCrAlY, ou comprenant un polymère PEEK ou à base de PEEK.

Selon une caractéristique, le corps métallique, les plaques métalliques, la couronne ou les demi-arbres comprennent un acier allié ou martensitique, de l'inox austénitique ou martensitique ou encore du titane.

De préférence, au moins un disque de court-circuit comprend au moins une face comportant une gorge circulaire accueillant un joint de manière à rendre étanche le contact entre la plaque ou le demi-arbre et le disque de court-circuit.

Avantageusement, au moins un demi-arbre, un disque de court-circuit, le corps métallique ou une plaque métallique comprend au moins une face comportant deux ou plusieurs gorges circulaires sensiblement concentriques, chaque gorge comprenant un joint, les joints étant de même nature ou de nature différente, de manière à former plusieurs barrières d'étanchéité de même nature ou de nature différente pour renforcer l'étanchéité du rotor.

De préférence, au moins un demi-arbre, un disque de court-circuit, le corps métallique ou une plaque métallique comprend au moins une face comportant au moins une gorge circulaire et un joint sensiblement concentrique à la barre conductrice, au tirant, au taraudage ou à la vis de manière à renforcer l'étanchéité et la protection chimique des barres, tirants et vis.

Selon encore un autre aspect, il est proposé une machine électrique tournante asynchrone comprenant un rotor telle que définie précédemment.

D'autres caractéristiques et avantages de l'invention apparaîtront à la lecture de la description qui suit de modes de réalisation de l'invention, donnés uniquement à titre d'exemples non limitatifs et en référence aux dessins sur lesquels :
- la figure 1, dont il a déjà été fait mention, illustre un rotor comprenant un arbre non traversant d'une machine tournante électrique selon l'état de la technique ;
- la figure 2 illustre un mode de réalisation d'une machine électrique tournante asynchrone;
- la figure 3 illustre une coupe selon une direction axiale d'un premier mode de réalisation du rotor ;
- la figure 4 illustre une coupe selon une direction axiale d'un mode de réalisation d'un disque de court-circuit ;
- la figure 5 illustre une coupe selon une direction axiale d'un deuxième mode de réalisation du rotor ;
- la figure 6 illustre une coupe partielle selon une direction axiale d'un troisième mode de réalisation du rotor ;
- la figure 7 illustre une coupe partielle selon une direction axiale d'un quatrième mode de réalisation du rotor ; et
- la figure 8 illustre une coupe partielle selon une direction axiale d'un cinquième mode de réalisation du rotor.

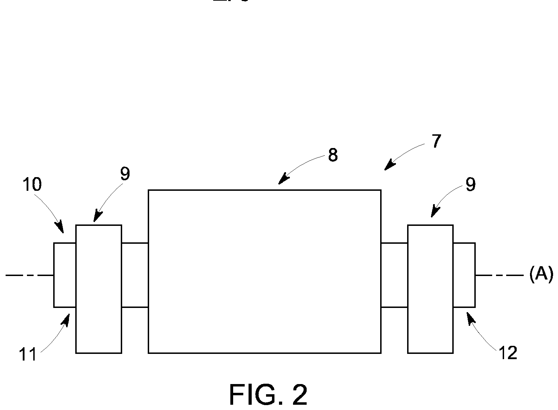

On se réfère à la figure 2 qui illustre un mode de réalisation d'une machine électrique tournante asynchrone 7 comprenant un stator 8, des paliers 9 et un rotor 10 inséré dans le stator 8 et les paliers 9.

Le rotor 10 comprend un arbre rotorique non traversant réalisé par exemple en acier, d'axe (A) confondu avec l'axe de rotation du rotor 10.

La machine électrique tournante asynchrone 7 est par exemple intégrée dans un motocompresseur et est noyée dans un gaz corrosif.

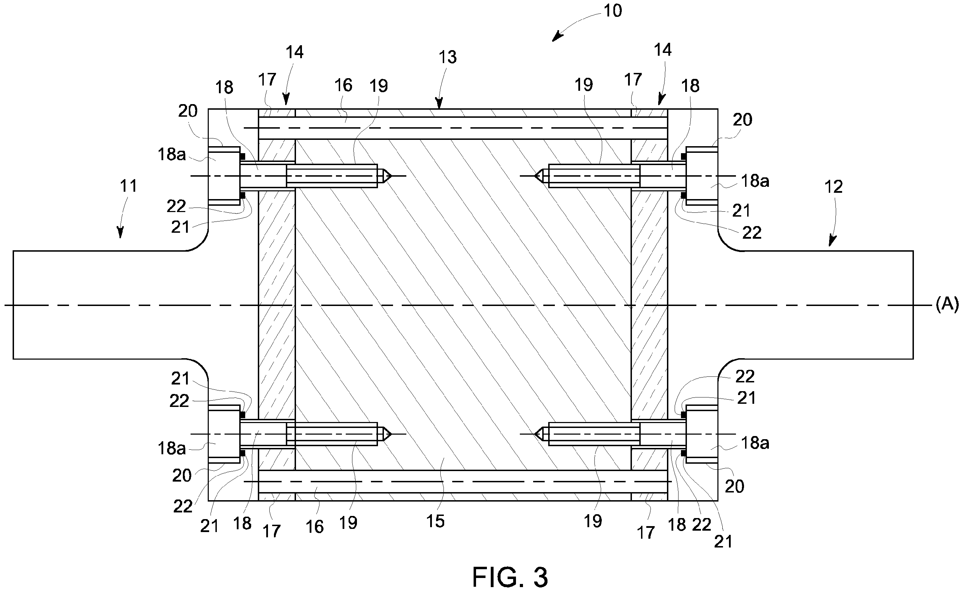

Comme visible sur la figure 3, le rotor 10 comprend deux demi-arbres 11 et 12 enserrant une masse magnétique cylindrique 13 et deux disques de court-circuit 14 intercalés chacun entre un demi-arbre et une des extrémités de la masse magnétique 13.

La masse magnétique 13 comprend un corps métallique monobloc 15 comportant des logements accueillant des barres conductrices 16 réparties uniformément sur un diamètre du corps métallique monobloc 15.

Les logements sont dimensionnés pour compenser la dilatation des barres conductrices 16 sous l'effet de la chaleur générée par le passage du courant dans les barres 16 lors de son fonctionnement et ainsi empêcher un balourd thermo-mécanique du rotor provoqué par la dilatation des barres lorsqu'elles ne peuvent pas se dilater librement, notamment dans une direction axiale.

Les disques de court-circuit 14 et les barres conductrices 16 sont réalisés par exemple en cuivre et sont électriquement reliés entre eux pour former une cage d'écureuil lorsque le rotor est animé d'un mouvement de rotation.

Les barres conductrices 16 peuvent être réalisées en cuivre allié, en aluminium, en aluminium allié ou tout autre matériau conducteur électrique.

Chaque disque de court-circuit 14 comprend des trous débouchant 17 dans lesquels sont respectivement logées les extrémités de chaque barre conductrice 16. Chaque extrémité de barre conductrice s'insère dans un trou 17 avec un jeu radial afin de compenser la dilatation des barres conductrices 16 sous l'effet de la chaleur générée par le passage du courant.

Lorsque le rotor 10 est animé d'un mouvement de rotation à une vitesse de par exemple 30000 tours par minute, les barres 16 sont projetées vers l'extérieur de la masse magnétique 13 sous l'effet de la force centrifuge.

Les barres 16 viennent en contact avec les disques de court-circuit 14 créant une connexion électrique entre les barres 16 et les disques de court-circuit 14.

Les barres conductrices 16 ne sont pas directement en contact avec le gaz corrosif susceptible de détériorer les barres conductrices 16 ce qui, sinon, pourrait par exemple entraîner un mauvais contact électrique entre les barres 16 et les disques de court-circuit 14.

Le rotor 10 comporte en outre des vis 18 réparties uniformément sur un diamètre de chaque demi-arbre 11 et 12.

Chaque vis 18 est en prise dans un taraudage 19 du corps métallique monobloc 15 de manière à maintenir compactés les disques de court-circuit 14 et le corps métallique 15 entre les demi-arbres 11 et 12.

Chaque tête de vis 18a est logée dans un lamage 20 du demi-arbre 11 et 12.

Chaque lamage 20 comprend en son fond une gorge circulaire 21 dans laquelle est disposé un joint 22 de sorte que le gaz ne puisse pas entrer en contact avec le taraudage 19.

Le joint 22 est de préférence torique, d'une seule pièce, sans coupure ou sans raboutage.

La gorge circulaire 21 est plus petite que le joint 22 non comprimé, notamment la profondeur de la gorge, de sorte que lorsque le joint 22 est comprimé par le serrage des vis 18, le joint se déforme assurant ainsi une parfaite étanchéité malgré les défauts de rugosité de la gorge 21 ou de la tête des vis 18a susceptibles de fuir sous la pression du gaz.

Ainsi, le gaz n'est pas susceptible d'endommager le filetage des vis 18 et les taraudages 19 du corps métallique 15.

Comme les liaisons vissées ne sont pas endommagées, un démontage du rotor est facilité et le rotor 10 ne risque pas de se disloquer par la rupture des liaisons vissées.

Sous la force de compactage exercée par les vis 18, les faces des disques de court-circuit se déforment et assurent une étanchéité entre le corps métallique 15 et les demi-arbres 11 et 12.

Par conséquent, les demi-arbres 11 et 12, les disques de court-circuit 14 et la masse magnétique 13 forment une enveloppe étanche de manière à empêcher qu'un gaz entre en contact avec les barres conductrices 16, les filetages des vis 18 et les taraudages 19 dans le corps métallique 15.

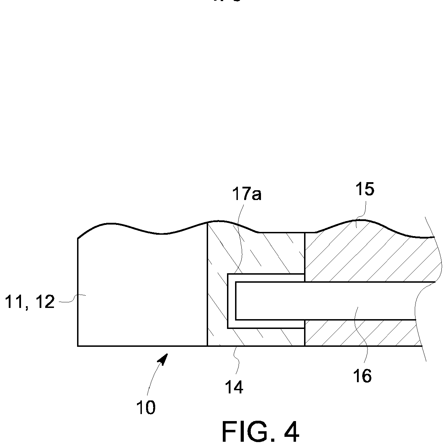

En variante comme représenté à la figure 4, les disques de court-circuit 14 peuvent comprendre des trous borgnes 17a à la place des trous débouchant 17 de la figure 3.

Dans ce cas, les extrémités des barres conductrices 16 sont disposées avec jeu axial et radial dans les trous borgnes 17a permettant la libre dilatation des barres, notamment dans la direction axiale empêchant un balourd thermo-mécanique du rotor par le blocage des barres.

Selon d'autres modes de réalisation non représentés, le corps métallique 15 peut comprendre sur au moins une extrémité une gorge circulaire comprenant un joint de manière à étancher le contact entre le corps métallique et le disque de court-circuit. La surface du demi-arbre 11 et 12 en contact avec le disque de court-circuit 14 peut comprendre une gorge circulaire comprenant un joint de manière à rendre étanche le contact entre le demi-arbre 11 et 12 et disque de court-circuit 14.

Selon encore un autre mode de réalisation non représenté, le corps métallique 15 est réalisé par l'assemblage et le compactage de plusieurs plaques métalliques 23.

Les plaques sont solidarisées entre elles par des tirants les traversant et reliant les deux plaques d'extrémité de la masse magnétique 13 ou par des vis noyées dans des lamages disposées de manière à relier deux plaques adjacentes entre elles, le corps métallique étant fixé par des vis 18 aux demi-arbres 11 et 12.

Dans ce qui suit, les éléments identiques à ceux décrits précédemment sont identifiés par les mêmes références alphanumériques.

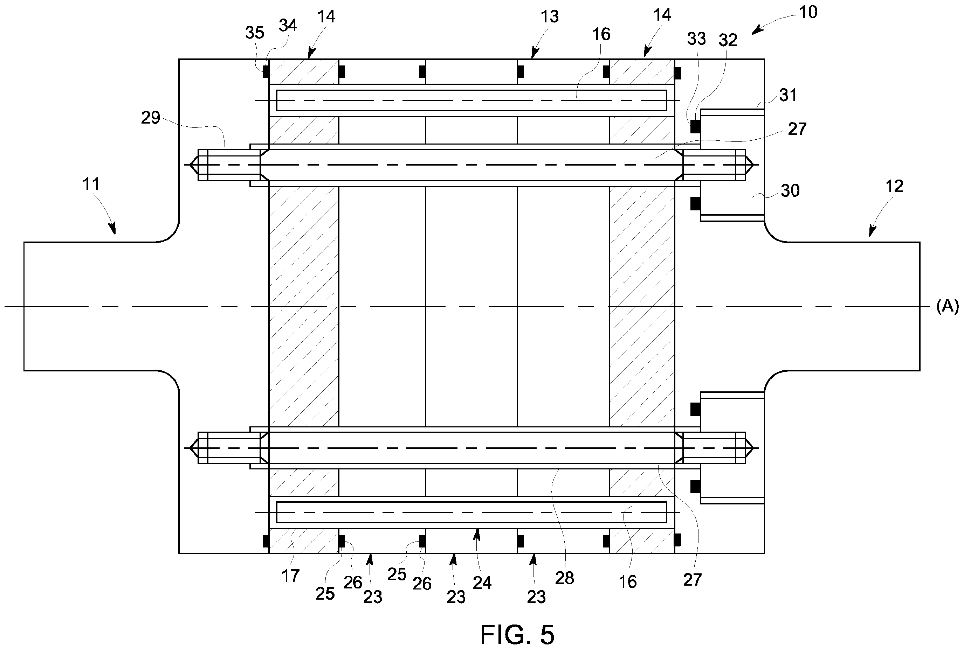

On se réfère à la figure 5 qui illustre une coupe selon une direction axiale d'un deuxième mode de réalisation du rotor 10.

On retrouve les deux demi-arbres 11 et 12 enserrant une masse magnétique cylindrique 13 et deux disques de court-circuit 14 intercalés chacun entre un demi-arbre et une des extrémités de la masse magnétique 13, et les barres conductrices 16 logées dans la masse magnétique.

La masse magnétique 13 comprend un empilement de plaques métalliques 23, par exemple en acier, comportant des logements 24 accueillant les barres conductrices 16.

Au moins une face de chaque plaque métallique 23 comporte au moins une gorge circulaire 25 dans laquelle est inséré un joint 26 de manière à rendre étanche le contact entre les surfaces des plaques métalliques 23 en contact lorsqu'elles sont compactées.

Une plaque métallique 23 comportant sur chacune de ses faces une gorge circulaire 25 comprenant un joint 26, alterne avec une plaque métallique 23 ne comportant pas de gorge 25.

En variante non représentée, chaque plaque métallique 23 comporte au moins une gorge 25.

Le rotor 10 comprend en outre des tirants 27 répartis uniformément sur au moins un diamètre du rotor 10 et insérés dans des deuxièmes logements 28 des plaques métalliques 23.

Une première extrémité des tirants 27 est en prise dans un trou borgne taraudé 29 du premier demi-arbre 11, et la deuxième extrémité des tirants est en prise avec un écrou borgne 30 disposé dans un lamage 31 du deuxième demi-arbre 12 de manière à maintenir compactées les plaques métalliques 23 et les disques de court-circuit 14 entre les demi-arbres 11 et 12.

Le deuxième demi-arbre 12 comporte au fond du lamage 31 une gorge circulaire 32 dans laquelle est inséré un joint 33 comprimé par l'écrou borgne 30 de sorte que le gaz ne rentre pas en contact avec les tirants 27.

La surface du demi-arbre 11 et 12 en contact avec le disque de court-circuit 14 comprend une gorge circulaire 34 comprenant un joint 35 de manière à rendre étanche le contact entre le demi-arbre 11 et 12 et le disque de court-circuit 14.

Par conséquent, les demi-arbres 11 et 12, les disques de court-circuit 14 et les plaques métalliques 23 forment une enveloppe étanche de manière à empêcher que le gaz n'entre en contact avec les barres conductrices 16 et les tirants 27

En variante non représentée, le disque de court-circuit 14 comprend au moins une face comportant une gorge circulaire accueillant un joint de manière à rendre étanche le contact entre la plaque 23 ou le demi-arbre 11, 12 et le disque de court-circuit.

Le disque de court-circuit 14 peut comporter sur chacune de ses faces une gorge circulaire comprenant un joint.

Selon d'autres modes de réalisation non représentés, au moins un demi-arbre 11, 12, un disque de court-circuit 14, le corps métallique 15 ou une plaque métallique 23 comprend au moins une face comportant deux ou plusieurs gorges circulaires sensiblement concentriques, chaque gorge comprenant un joint, les joints étant de même nature ou de nature différente, de manière à former plusieurs barrières d'étanchéité de même nature ou de nature différente pour renforcer l'étanchéité du rotor.

Lorsque les joints sont de nature différente, la matière de chaque joint est choisie de sorte que chaque joint rende le rotor étanche par rapport à l'un des composants chimiquement agressif contenu dans le gaz.

Selon encore un autre mode de réalisation non représenté, au moins un demi-arbre 11, 12, un disque de court-circuit 14, le corps métallique 15 ou une plaque métallique 23 comprend au moins une face comportant au moins une gorge circulaire et un joint sensiblement concentrique à la barre conductrice 16, au tirant 27, au taraudage 29 ou à la vis 18 de manière à renforcer l'étanchéité et la protection chimique des barres, tirants et vis. Les joints sont de préférence de nature différente.

Dans les modes de réalisation exposés précédemment, le disque de court-circuit 14 est en contact avec le gaz.

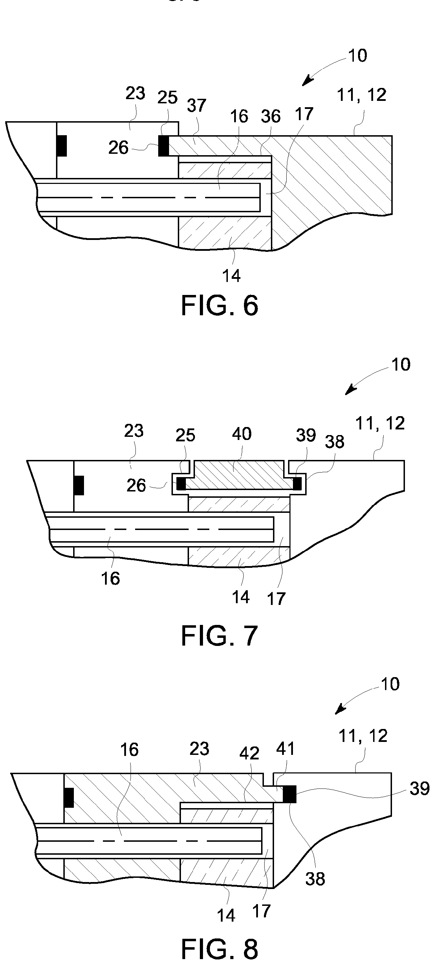

On se réfère aux figures 6, 7 et 8 qui illustrent une coupe partielle selon une direction axiale du rotor de modes de réalisation d'un rotor 10 dans lequel le disque de court-circuit 14 n'est pas en contact avec le gaz.

Dans un troisième mode de réalisation du rotor 10 illustré à la figure 6, le demi-arbre 11, 12 comporte un lamage circulaire 36.

Le diamètre extérieur du disque de court-circuit 14, le diamètre du lamage 36 et les diamètres extérieur et intérieur de l'extrémité 37 du demi-arbre 12 dirigée vers la plaque métallique 23 afin de comprimer le joint 26 sont dimensionnés de sorte que le disque de court-circuit s'insère dans le lamage circulaire 36 et l'extrémité 37 du demi-arbre 12 s'insère dans la gorge circulaire 25 de la plaque métallique 23 pour que le gaz ne rentre pas en contact avec le disque de court-circuit 14.

En variante non représente, seule la portion de l'extrémité 37 s'insérant dans la gorge circulaire 25 comporte un diamètre extérieur plus petit que le diamètre extérieur de la plaque métallique 23.

Dans un quatrième mode de réalisation du rotor 10 visible à la figure 7, le rotor 10 comporte en outre une couronne 40, de préférence en acier ou en inox, et le demi-arbre 11, 12 comporte sur la face en contact avec le disque de court-circuit 14 une gorge circulaire 38 dans laquelle est inséré un joint 39.

La couronne 40, la gorge circulaire 38 du demi-arbre 12 et le diamètre extérieur du disque de court-circuit 14 sont dimensionnés de sorte que le disque de court-circuit soit recouvert par la couronne 40 s'insérant dans la gorge circulaire 38 du demi-arbre 12 et dans la gorge circulaire 25 de la plaque métallique 23 comprenant le joint 26 de sorte que les joints 26 et 39 soient comprimés et que le gaz ne rentre pas en contact avec le disque de court-circuit 14.

Dans un cinquième mode de réalisation du rotor 10 illustré à la figure 8, la gorge circulaire 38 dans laquelle est inséré le joint 39, est pratiquée dans la face du demi-arbre 11, 12 en contact avec le disque de court-circuit 14.

La plaque métallique 23 comporte sur la face en contact avec le disque de court-circuit 14 un lamage circulaire 42.

Le diamètre extérieur du disque de court-circuit 14, le diamètre du lamage 42 et les diamètres extérieur et intérieur de l'extrémité 41 de la plaque métallique 23 dirigée vers le demi-arbre 12 sont dimensionnés de sorte que le disque de court circuit s'insère dans le lamage circulaire 42 et l'extrémité 41 de la plaque métallique 23 s'insère dans la gorge circulaire 38 du demi-arbre 12 afin de comprimer le joint 39 et afin que le gaz ne rentre pas en contact avec le disque de court-circuit 14.

En variante non représentée, le disque de court-circuit 14 comprend un trou borgne à la place du trou 17 de sorte qu'il subsiste un jeu axial et radial entre le trou borgne et la barre conductrice 16 s'insérant dans le trou borgne.

Les joints 22, 26, 33, 35, 39 peuvent comprendre par exemple un joint torique en inox, en polymère ou métallique, d'une seule pièce sans coupure ni raboutage.

Selon un autre mode de réalisation, la surface extérieure du rotor 10 comprend un revêtement comprenant du nickel, de préférence comprenant un alliage du type NiCrAlY ou un alliage du type MCrAlY.

Le revêtement peut aussi comprendre du polymère PEEK ou être à base de PEEK.

Le revêtement qui protège la surface extérieure du rotor 10 n'est ainsi pas attaqué par des composants chimiquement agressifs contenus dans le gaz.

Le revêtement a une épaisseur de 0.1 mm à 0.5 mm, de préférence 0.3 mm.

Le revêtement est appliqué selon l'un de procédés bien connus.

De plus, le revêtement bouche les interstices notamment entre les disques de court-circuit 14 et les demi-arbres 11 et 12, ou entre les plaques métalliques 23, et protège aussi le diamètre extérieur du rotor 10 ainsi que ses faces latérales.

Le rotor 10 est imperméable au gaz. Les composants du rotor les plus fragiles ne sont pas en contact avec le gaz.

Lors du fonctionnement du motocompresseur, le gaz n'est pas stocké dans le rotor 10.

Par conséquent, lors des phases de démarrage et d'arrêt du motocompresseur, le rotor ne subit pas de phénomène de dépressurisation violente, même si un volume très faible de gaz a malgré tout réussi à pénétrer le rotor.

En variantes non représentées, les barres conductrices 16 sont rectangulaires, rectangulaires à bords arrondis ou oblongues.

Selon d'autres modes de réalisation, le rotor comporte deux ou plusieurs rangées de barres 16 disposées sur deux ou plusieurs diamètres sensiblement concentriques, ou deux ou plusieurs rangées de tirants 27 ou de vis 18 disposés sur deux ou plusieurs diamètres sensiblement concentriques.

Le matériau du corps métallique 15, des plaques métalliques 23, de la couronne 40 et des demi-arbres 11 et 12 est résistant à la corrosion et aux composants agressifs dans le gaz.

Le matériau peut comprendre un acier allié ou martensitique, de l'inox austénitique ou martensitique ou encore du titane.

## Revendications

1. Rotor pour machine électrique tournante asynchrone à arbre non traversant comprenant deux demi-arbres (11, 12) enserrant une masse magnétique cylindrique (13) et deux disques de court-circuit (14) intercalés chacun entre les demi-arbres et l'une des extrémités de la masse magnétique, et des barres conductrices (16) logées dans la masse magnétique et réparties uniformément sur au moins un diamètre de la masse magnétique de sorte que les disques de court-circuit et les barres conductrices forment une cage d'écureuil, **caractérisé en ce que** la surface d'au moins un demi-arbre (11, 12) en contact avec le disque de court-circuit (14) comprend au moins une gorge circulaire (34) comprenant un joint (35) de manière à former un contact étanche entre le demi-arbre et disque de court-circuit.

2. Rotor selon la revendication 1, dans lequel chaque extrémité des barres conductrices (16) est logée avec jeu dans un trou borgne (17a) d'un disque de court-circuit (14).

3. Rotor selon la revendication 1, dans lequel chaque extrémité des barres conductrices (16) est logée avec jeu dans un trou débouchant (17) d'un disque de court-circuit (14).

4. Rotor selon l'une quelconque des revendications 1 à 3, dans lequel la masse magnétique (13) comprend un corps métallique monobloc (15) comportant des logements accueillant les barres conductrices.

5. Rotor selon la revendication 4, comportant en outre des vis (18) réparties uniformément sur au moins un diamètre du demi-arbre, chaque vis étant en prise dans un taraudage (19) du corps métallique monobloc (15) de manière à maintenir compactés les disques de court-circuit (14) et le corps métallique monobloc entre les demi-arbres (11, 12), chaque tête de vis (18a) étant logée dans un lamage (20) du demi-arbre comprenant au fond du lamage une gorge circulaire (21), un joint (22) étant disposé dans la gorge circulaire de sorte que le gaz ne puisse pas entrer en contact avec le taraudage.

6. Rotor selon l'une des revendications 4 et 5, dans lequel au moins une extrémité du corps métallique (15) comprend une gorge circulaire comprenant un joint de manière à former un contact étanche entre le corps métallique et le disque de court-circuit (14).

7. Rotor selon l'une quelconque des revendications 1 à 3, dans lequel la masse magnétique comprend un empilement de plaques métalliques (23) comportant des logements (24) accueillant les barres conductrices (16), au moins une face de chaque plaque métallique comportant une gorge circulaire (25) comprenant un joint (26) de manière à former un contact étanche entre les surfaces des plaques métalliques en contact.

8. Rotor selon la revendication 7, comportant en outre des tirants (27) répartis uniformément sur au moins un diamètre du rotor, les tirants étant insérés dans des deuxièmes logements (28) des plaques métalliques (23), une première extrémité des tirants étant en prise dans un trou borgne taraudé (29) du premier demi-arbre (11) et la deuxième extrémité des tirants étant en prise avec un écrou borgne (30) disposé dans un lamage (31) du deuxième demi-arbre (12), le deuxième demi-arbre comportant au fond du lamage une gorge circulaire (32) comprenant un joint (33) de manière à maintenir compactées les plaques métalliques et les disques de court-circuit entre les demi-arbres et de sorte que le gaz ne rentre pas en contact avec le tirant.

9. Rotor selon l'une des revendications 7 et 8, dans lequel au moins un demi-arbre (11, 12) comporte un lamage circulaire (36), le diamètre extérieur du disque de court-circuit (14), le diamètre du lamage et les diamètres intérieur et extérieur de l'extrémité (37) du demi-arbre dirigée vers la plaque métallique (23) étant dimensionnés de sorte que le disque de court-circuit s'insère dans le lamage circulaire et l'extrémité (37) du demi-arbre (11, 12) s'insère dans la gorge circulaire (25) de la plaque métallique (23) de sorte que le joint (26) soit comprimé et le gaz ne rentre pas en contact avec le disque de court-circuit.

10. Rotor selon l'une des revendications 7 et 8, comprenant en outre une couronne (40), au moins un demi-arbre (11, 12) comportant sur sa face en contact avec le disque de court-circuit (14) une gorge circulaire (38) comprenant un joint (39), la couronne, la gorge circulaire du demi-arbre, et le diamètre extérieur du disque de court-circuit étant dimensionnés de sorte que le disque de court-circuit s'insère dans le diamètre intérieur de la couronne et que la couronne s'insère dans la gorge circulaire du demi-arbre et dans la gorge circulaire (25) de la plaque métallique (23) comprenant un joint (26) de sorte que les joints (26) et (39) soient comprimés et que le gaz ne rentre pas en contact avec le disque de court-circuit.

11. Rotor selon l'une des revendications 7 et 8, dans lequel au moins un demi-arbre (11, 12) comporte sur la face en contact avec le disque de court-circuit une gorge circulaire (38) comprenant un joint (39), la plaque métallique (23) comportant un lamage circulaire (42) sur la face en contact avec le disque de court-circuit (14), le diamètre extérieur du disque de court-circuit, le diamètre du lamage et les diamètres intérieur et extérieur de l'extrémité (41) de la plaque métallique dirigée vers le demi-arbre étant dimensionnés de sorte que le disque de court-circuit s'insère dans le lamage circulaire et l'extrémité de la plaque métallique s'insère dans la gorge circulaire du demi-arbre de sorte que le joint (39) soit comprimé et que le gaz ne rentre pas en contact avec le disque de court-circuit.

12. Rotor selon l'une quelconque des revendications 5 à 11, dans lequel le joint (22, 26, 33, 35, 39) comprend un joint de préférence torique en inox, en polymère ou métallique, de préférence d'une seule pièce sans coupure ni raboutage.

13. Rotor selon l'une quelconque des revendications 1 à 12, dans lequel la surface extérieure du rotor comprend un revêtement comprenant du nickel ou comprenant un alliage de type NiCrAlY ou un alliage du type MCrAlY, ou comprenant un polymère PEEK ou à base de PEEK.

14. Rotor selon l'une quelconque des revendications 1 à 13, dans lequel le corps métallique (15), les plaques métalliques (23), la couronne (40) ou les demi-arbres (11, 12) comprennent un acier allié ou martensitique, de l'inox austénitique ou martensitique ou encore du titane.

15. Rotor selon l'une quelconque des revendications 1 à 14, dans lequel au moins un disque de court-circuit (14) comprend au moins une face comportant une gorge circulaire accueillant un joint de manière à rendre étanche le contact entre la plaque (23) ou le demi-arbre (11, 12) et le disque de court-circuit.

16. Rotor selon l'une quelconque des revendications 1 à 15, dans lequel au moins un demi-arbre (11, 12), un disque de court-circuit (14), le corps métallique (15) ou une plaque métallique (23) comprend au moins une face comportant deux ou plusieurs gorges circulaires sensiblement concentriques, chaque gorge comprenant un joint, les joints étant de même nature ou de nature différente, de manière à former plusieurs barrières d'étanchéité de même nature ou de nature différente pour renforcer l'étanchéité du rotor.

17. Rotor selon l'une quelconque des revendications 1 à 15, dans lequel au moins un demi-arbre (11, 12), un disque de court-circuit (14), le corps métallique (15) ou une plaque métallique (23) comprend au moins une face comportant au moins une gorge circulaire et un joint sensiblement concentrique à la barre conductrice (16), au tirant (27), au taraudage (29) ou à la vis (18) de manière à renforcer l'étanchéité et la protection chimique des barres, tirants et vis.

18. Machine électrique tournante asynchrone comprenant un rotor selon l'une quelconque des revendications précédentes.

## Patentansprüche

1. Rotor für eine asynchrone, drehende, elektrische Maschine mit nicht durchgehender Welle, umfassend zwei Wellenhälften (11, 12), die eine zylindrische, magnetische Masse (13) und zwei Kurzschlussscheiben (14) einschließen, die jeweils zwischen den Wellenhälften und einem der Enden der magnetischen Masse eingefügt sind, und Leiterstäbe (16), die in der magnetischen Masse aufgenommen sind und gleichmäßig auf wenigstens einem Durchmesser der magnetischen Masse so verteilt sind, dass die Kurzschlussscheiben und die Leiterstäbe einen Käfigläufer bilden, **dadurch gekennzeichnet, dass** die Oberfläche wenigstens einer Wellenhälfte (11, 12), die mit der Kurzschlussscheibe (14) in Kontakt ist, wenigstens eine Ringnut (34) umfasst, die eine Dichtung (35) umfasst, um einen dichten Kontakt zwischen der Wellenhälfte und der Kurzschlussscheibe zu bilden.

2. Rotor nach Anspruch 1, wobei jedes Ende der Leiterstäbe (16) mit Spiel in einem Sackloch (17a) einer Kurzschlussscheibe (14) aufgenommen ist.

3. Rotor nach Anspruch 1, wobei jedes Ende der Leiterstäbe (16) mit Spiel in einem Durchgangsloch (17) einer Kurzschlussscheibe (14) aufgenommen ist.

4. Rotor nach einem der Ansprüche 1 bis 3, wobei die magnetische Masse (13) einen einstückigen Metallkörper (15) umfasst, der Aussparungen umfasst, welche die Leiterstäbe aufnehmen.

5. Rotor nach Anspruch 4, weiter umfassend Schrauben (18), die gleichmäßig auf wenigstens einem Durchmesser der Wellenhälfte verteilt sind, wobei jede Schraube in ein Innengewinde (19) des einstückigen Metallkörpers (15) eingreift, um die Kurzschlussscheiben (14) und den einstückigen Metallkörper zwischen den Wellenhälften (11, 12) zusammengepresst zu halten, wobei jeder Schraubenkopf (18a) in einer Senkung (20) der Wellenhälfte aufgenommen ist, umfassend eine Ringnut (21) am Boden der Senkung, wobei eine Dichtung (22) in der Ringnut so angeordnet ist, dass das Gas mit dem Innengewinde nicht in Kontakt treten kann.

6. Rotor nach einem der Ansprüche 4 und 5, wobei wenigstens ein Ende des Metallkörpers (15) eine Ringnut umfasst, die eine Dichtung umfasst, um einen dichten Kontakt zwischen dem Metallkörper und der Kurzschlussscheibe (14) zu bilden.

7. Rotor nach einem der Ansprüche 1 bis 3, wobei die magnetische Masse einen Stapel von Metallplatten (23) umfasst, die Aussparungen (24) umfassen, welche die Leiterstäbe (16) aufnehmen, wobei wenigstens eine Fläche jeder Metallplatte eine Ringnut (25) umfasst, die eine Dichtung (26) umfasst, um einen dichten Kontakt zwischen den Oberflächen der in Kontakt befindlichen Metallplatten zu bilden.

8. Rotor nach Anspruch 7, weiter umfassend Zugstangen (27), die gleichmäßig auf wenigstens einem Durchmesser des Rotors verteilt sind, wobei die Zugstangen in zweite Aufnahmen (28) der Metallplatten (23) eingefügt sind, wobei ein erstes Ende der Zugstangen in ein Sackloch mit Innengewinde (29) der ersten Wellenhälfte (11) eingreift und das zweite Ende der Zugstangen in eine Hutmutter (30) eingreift, die in einer Senkung (31) der zweiten Wellenhälfte (12) angeordnet ist, wobei die zweite Wellenhälfte am Boden der Senkung eine Ringnut (32) umfasst, die eine Dichtung (33) umfasst, um die Metallplatten und die Kurzschlussscheiben zwischen den Wellenhälften zusammengepresst zu halten und sodass das Gas nicht mit den Zugstangen in Kontakt tritt.

9. Rotor nach einem der Ansprüche 7 und 8, wobei wenigstens eine Wellenhälfte (11, 12) eine Rundsenkung (36) umfasst, wobei der Außendurchmesser der Kurzschlussscheibe (14), der Durchmesser der Senkung und der Innen- und Außendurchmesser des Endes (37) der Wellenhälfte, das zur Metallplatte (23) gerichtet ist, so dimensioniert sind, dass sich die Kurzschlussscheibe in die Rundsenkung einfügt und sich das Ende (37) der Wellenhälfte (11, 12) in die Ringnut (25) der Metallplatte (23) so einfügt, dass die Dichtung (26) zusammengepresst wird und das Gas nicht mit der Kurzschlussscheibe in Kontakt tritt.

10. Rotor nach einem der Ansprüche 7 und 8, weiter umfassend einen Kranz (40), wobei wenigstens eine Wellenhälfte (11, 12) auf ihrer Fläche, die mit der Kurzschlussscheibe (14) in Kontakt ist, eine Ringnut (38) umfasst, die eine Dichtung (39) umfasst, wobei der Kranz, die Ringnut der Wellenhälfte und der Außendurchmesser der Kurzschlussscheibe so dimensioniert sind, dass sich die Kurzschlussscheibe in den Innendurchmesser des Kranzes einfügt und sich der Kranz in die Ringnut der Wellenhälfte und in die Ringnut (25) der Metallplatte (23) einfügt, die eine Dichtung (26) umfasst, sodass die Dichtungen (26) und (39) zusammengepresst werden und das Gas nicht mit der Kurzschlussscheibe in Kontakt tritt.

11. Rotor nach einem der Ansprüche 7 und 8, wobei wenigstens eine Wellenhälfte (11, 12) auf ihrer Fläche, die mit der Kurzschlussscheibe in Kontakt ist, eine Ringnut (38) umfasst, die eine Dichtung (39) umfasst, wobei die Metallplatte (23) eine Rundsenkung (42) auf der Fläche umfasst, die mit der Kurzschlussscheibe (14) in Kontakt ist, wobei der Außendurchmesser der Kurzschlussscheibe, der Durchmesser der Senkung und der Innen- und Außendurchmesser des Endes (41) der Metallplatte, das zur Wellenhälfte gerichtet ist, so dimensioniert sind, dass sich die Kurzschlussscheibe in die Rundsenkung einfügt und sich das Ende der Metallplatte in die Ringnut der Wellenhälfte so einfügt, dass die Dichtung (39) zusammengepresst wird und das Gas nicht mit der Kurzschlussscheibe in Kontakt tritt.

12. Rotor nach einem der Ansprüche 5 bis 11, wobei die Dichtung (22, 26, 33, 35, 39) vorzugsweise einen O-Ring aus Edelstahl, aus Polymer oder Metall, vorzugsweise einstückig ohne Einschnitt oder Fuge umfasst.

13. Rotor nach einem der Ansprüche 1 bis 12, wobei die äußere Oberfläche des Rotors eine Beschichtung umfasst, die Nickel umfasst oder eine Legierung vom Typ NiCrAlY oder eine Legierung vom Typ MCrAlY umfasst, oder die ein PEEK-Polymer oder auf Basis von PEEK umfasst.

14. Rotor nach einem der Ansprüche 1 bis 13, wobei der Metallkörper (15), die Metallplatten (23), der Kranz (40) oder die Wellenhälften (11, 12) einen legierten oder martensitischen Stahl, austenitischen oder martensitischen Edelstahl oder auch Titan umfassen.

15. Rotor nach einem der Ansprüche 1 bis 14, wobei wenigstens eine Kurzschlussscheibe (14) wenigstens eine Fläche umfasst, die eine Ringnut umfasst, die eine Dichtung aufnimmt, um den Kontakt zwischen der Platte (23) oder der Wellenhälfte (11, 12) und der Kurzschlussscheibe dicht zu machen.

16. Rotor nach einem der Ansprüche 1 bis 15, wobei wenigstens eine Wellenhälfte (11, 12), eine Kurzschlussscheibe (14), der Metallkörper (15) oder eine Metallplatte (23) wenigstens eine Fläche umfasst, die zwei oder mehrere im Wesentlichen konzentrische Ringnuten umfasst, wobei jede Nut eine Dichtung umfasst, wobei die Dichtungen gleicher oder unterschiedlicher Beschaffenheit sind, um mehrere Dichtheitsbarrieren gleicher oder unterschiedlicher Beschaffenheit zu bilden, um die Dichtheit des Rotors zu verstärken.

17. Rotor nach einem der Ansprüche 1 bis 15, wobei wenigstens eine Wellenhälfte (11, 12), eine Kurzschlussscheibe (14), der Metallkörper (15) oder eine Metallplatte (23) wenigstens eine Fläche umfasst, die wenigstens eine Ringnut und eine Dichtung umfasst, die im Wesentlichen konzentrisch ist mit dem Leiterstab (16), der Zugstange (27), dem Innengewinde (29) oder der Schraube (18), um die Dichtheit und den chemischen Schutz der Stäbe, Zugstangen und Schrauben zu verstärken.

18. Asynchrone, drehende, elektrische Maschine, umfassend einen Rotor nach einem der vorstehenden Ansprüche.

## Claims

1. Rotor for an asynchronous rotating electrical machine with a non-through shaft comprising two half-shafts (11, 12) clamping a cylindrical magnetic mass (13) and two short-circuit discs (14) each sandwiched between the half-shafts and one of the ends of the magnetic mass, and conductive bars (16) housed inside the magnetic mass and distributed evenly over at least one diameter of the magnetic mass such that the short-circuit discs and the conductive bars form a squirrel cage, **characterised in that** the surface of at least one half-shaft (11, 12) in contact with the short-circuit disc (14) comprises at least one circular groove (34) comprising a seal (35) so as to form a tight contact between the half-shaft and the short-circuit disc.

2. Rotor according to claim 1, wherein each end of the conductive bars (16) is housed with play in a blind hole (17a) in a short-circuit disc (14).

3. Rotor according to claim 1, wherein each end of the conductive bars (16) is housed with play in a through-hole (17) in a short-circuit disc (14).

4. Rotor according to any one of claims 1 to 3, wherein the magnetic mass (13) comprises a one-piece metal body (15) having housings for receiving the conductive bars.

5. Rotor according to claim 4, further having screws (18) evenly distributed over at least one diameter of the half-shaft, each screw being engaged in a tapping (19) of the one-piece metal body (15) so as to keep the short-circuit discs (14) and the one-piece metal body compacted between the half-shafts (11, 12), each screw head (18a) being housed in a counterbore (20) of the half-shaft comprising a circular groove (21) at the bottom of the counterbore, a seal (22) being disposed in the circular groove such that the gas cannot come into contact with the tapping.

6. Rotor according to one of claims 4 and 5, wherein at least one end of the metal body (15) comprises a circular groove comprising a seal so as to form a tight contact between the metal body and the short-circuit disc (14).

7. Rotor according to any one of claims 1 to 3, wherein the magnetic mass comprises a stack of metal plates (23) having housings (24) for receiving the conductive bars (16), at least one face of each metal plate having a circular groove (25) comprising a seal (26) so as to form a tight contact between the surfaces of the contacting metal plates.

8. Rotor according to claim 7, further having tie rods (27) evenly distributed over at least one diameter of the rotor, the tie rods being inserted into second housings (28) of the metal plates (23), a first end of the tie rods being engaged in a tapped blind hole (29) of the first half-shaft (11) and the second end of the tie rods being engaged with a blind nut (30) disposed in a counterbore (31) of the second half-shaft (12), the second half-shaft having, at the bottom of the counterbore, a circular groove (32) comprising a seal (33) so as to keep the metal plates and the short-circuit discs compacted between the half-shafts and such that the gas does not come into contact with the tie rod.

9. Rotor according to one of claims 7 and 8, wherein at least one half-shaft (11, 12) has a circular counterbore (36), the outer diameter of the short-circuit disc (14), the diameter of the counterbore and the inner and outer diameters of the end (37) of the half-shaft directed towards the metal plate (23) being dimensioned such that the short-circuit disc fits into the circular counterbore and the end (37) of the half-shaft (11, 12) fits into the circular groove (25) of the metal plate (23) such that the seal (26) is compressed and the gas does not come into contact with the short-circuit disc.

10. Rotor according to one of claims 7 and 8, further comprising a ring (40), at least one half-shaft (11, 12) having, on the face thereof that is in contact with the short-circuit disc (14), a circular groove (38) comprising a seal (39), the ring, the circular groove of the half-shaft and the outer diameter of the short-circuit disc being dimensioned such that the short-circuit disc fits into the inner diameter of the ring and such that the ring fits into the circular groove of the half-shaft and into the circular groove (25) of the metal plate (23) comprising a seal (26) such that the seals (26) and (39) are compressed and such that the gas does not come into contact with the short-circuit disc.

11. Rotor according to one of claims 7 and 8, wherein at least one half-shaft (11, 12) has, on the face in contact with the short-circuit disc, a circular groove (38) comprising a seal (39), the metal plate (23) having a circular counterbore (42) on the face in contact with the short-circuit disc (14), the outer diameter of the short-circuit disc, the diameter of the counterbore and the inner and outer diameters of the end (41) of the metal plate directed towards the half-shaft being dimensioned such that the short-circuit disc fits into the circular counterbore and the end of the metal plate fits into the circular groove of the half-shaft such that the seal (39) is compressed and such that the gas does not come into contact with the short-circuit disc.

12. Rotor according to any one of claims 5 to 11, wherein the seal (22, 26, 33, 35, 39) comprises a stainless steel, polymer or metal seal, preferably an O-ring, made in one piece without cuts or butt joints.

13. Rotor according to any one of claims 1 to 12, wherein the outer surface of the rotor comprises a coating containing nickel or containing a NiCrAlY type alloy or a MCrAlY type alloy, or containing a PEEK or PEEK-based polymer.

14. Rotor according to any one of claims 1 to 13, wherein the metal body (15), the metal plates (23), the ring (40) or the half-shafts (11, 12) contain alloy or martensitic steel, austenitic or martensitic stainless steel or titanium.

15. Rotor according to any one of claims 1 to 14, wherein at least one short-circuit disc (14) comprises at least one face having a circular groove for receiving a seal so as to seal the contact between the plate (23) or the half shaft (11, 12) and the short-circuit disc.

16. Rotor according to any one of claims 1 to 15, wherein at least a half-shaft (11, 12), a short-circuit disc (14), the metal body (15) or a metal plate (23) comprises at least one face having two or more substantially concentric circular grooves, each groove comprising a seal, the seals being of the same or different kinds, so as to form a plurality of sealing barriers of the same or different kinds to improve the sealing of the rotor.

17. Rotor according to any one of claims 1 to 15, wherein at least a half-shaft (11, 12), a short-circuit disc (14), the metal body (15) or a metal plate (23) comprises at least one face having at least one circular groove and a seal substantially concentric with the conductive bar (16), the tie rod (27), the tapping (29) or the screw (18) so as to improve the sealing and chemical protection of the bars, the tie rods and the screws.

18. Asynchronous rotating electrical machine comprising a rotor according to any one of the preceding claims.
